# EUROPEAN PATENT SPECIFICATION

(11) **EP 3 033 507 B1**
(45) Date of publication and mention of the grant of the patent: **21.10.2020**
(21) Application number: 14753331.9
(22) Date of filing: 25.07.2014
(51) Int. Cl.: F02C 1/08, F02C 3/02, F02C 7/08, F16K 11/074, F28D 17/04, F28D 21/00

(54) **FLUID DISTRIBUTING APPARATUS**
FLÜSSIGKEITSVERTEILUNGSVORRICHTUNG
APPAREIL DE DISTRIBUTION DE FLUIDE

(30) Priority: 15.08.2013 NL 2011310
(43) Date of publication of application: 22.06.2016
(73) Proprietor: Ice Industrial Properties BV, 2153 GC Nieuw-Vennep (NL)
(72) Inventor: KRUIJER, George Johannes, 2134 AE Hoofddorp (NL); HOOGLAND, Johannes Arjen, 2134 EJ Hoofddorp (NL); MAY, Karl, 2042 CN Zandvoort (NL)
(74) Representative: Cramwinckel, Michiel
(86) International application number: PCT/NL2014/050512
(87) International publication number: WO 2014/171836

(56) References cited:
- WO-A1-2013/125948
- GB-A- 712 107
- US-A- 4 614 204
- US-A- 4 690 179
- US-B1- 6 487 843

## Description

### Field of the invention

The invention is directed to a fluid distributing apparatus and to its use in a process to obtain a compressed gas.

### Background of the invention

Compressing gas is a well known process. Typically compressors are used to compress a gas. Gas compression is for example part of a gas turbine process to generate power. US-A-2011/0088404 describes a process wherein air is compressed in a gas compressor. The compressed air is combusted with a fuel and the resulting hot process gas is expanded in an expander. The expander is coupled to a device to convert the rotational energy to power, e.g. electrical power. The energy required to operate the compressor is typically delivered by the rotational energy of the expander by a direct coupling of the compressor and the expander as shown in Figure 1 of this publication. This publication also describes the use of a source of waste heat to be used to heat partially compressed air as obtained in the compressor. This heated air is used to generate additional power in a lower pressure expansion stage.

BE1016500 describes a process wherein air is compressed in several compression stages. The compressed air is used in a combustion turbine. Before being compressed the air is heated using heat recovery from the exhaust gas of the turbine.

US2011/036097 describes a rotary regenerative heat exchanger for heat exchange between a compressed gas and the exhaust gas of a combustor.

A disadvantage of a traditional gas turbine process as illustrated above is that a large compressor is required. A further disadvantage is that the energy to operate the compressor is provided by the rotational energy of the expanders of the gas turbine. Thus part of the energy obtained in the expanders is used for compressing the combustion air. This coupled system makes the gas turbine process expensive and less efficient. It is an object of the present invention to provide an alternative process for compressing a gas.

GB712107 describes a pressure exchanger comprising a cell rotor in which gas is compressed and expanded.

US4614204 describes a multiport rotary disc valve.

US6487843 described a compressor type machine in which air is enclosed in air chambers present between interlocking rotating blades as present on two screw spindles. The air is heated isochorically against exhaust gasses flowing countercurrently through the hollow blades.

Applicants have now found a process to obtain a compressed gas which uses a novel fluid distributor apparatus.

### Summary of the invention

This invention is directed to a fluid distributing apparatus according to the embodiments defined in claims 1 and 2. The apparatus comprising a fixed part and a rotating part, wherein the fixed part is provided with at least two inlet channels and at least two outlet channels and wherein each inlet and outlet channel has a facing opening facing the rotating part, the rotating part is rotatably positioned relative to the fixed part such that the rotating part can have multiple rotational positions relative to the fixed part, wherein the rotating part is provided with at least two connecting channels each connecting channel having an inlet and outlet opening in the rotating part, wherein the inlet and outlet opening of at least one connecting channel in the rotating part aligns with the facing openings of at least one inlet and outlet channel in the fixed part in at least one rotational position and wherein in at least one other rotational position the inlet and outlet opening of the connecting channel in the rotating part is not aligned with the same facing openings of the inlet and outlet channel in the fixed part,
wherein the inlet opening of at least one connecting channel in the rotating part aligns with the facing opening of one inlet channel in the fixed part and wherein the outlet opening of the connecting channel aligns with the facing opening of an outlet channel in the fixed part in at least one rotational position and wherein in at least one other rotational position the same inlet opening of the connecting channel in the rotating part is aligned with a facing opening of a different inlet channel in the fixed part and aligned with a facing opening of a different outlet channel in the fixed part,
wherein the rotating part has a cylindrical shape and wherein the fixed part or fixed parts are positioned axial relative to the rotating part at one side or at both sides and wherein the rotating part is comprised of two or more cylindrical layers piled up along the axis of rotation and wherein the connecting channels are formed by openings in the cylindrical layers or
wherein the fixed part has a cylindrical shape positioned along the axis of rotation of the rotating part and wherein the rotating part has a tubular shape positioned radially outward from the fixed part and wherein the rotating part is comprised of two or more tubular layers radially positioned relative to each other with respect to the axis of rotation and wherein the connecting channels are formed by openings in the tubular layers.

Applicants have found that this apparatus may advantageously be used in a process to obtain a compressed gas. The invention is therefore also directed to a configuration comprising the fluid distributing apparatus, a process using this configuration to obtain a compressed gas and a process to generate electrical power using the process to obtain a compressed gas as will be described in more detail below.

### Brief description of the drawings

Figure 1 shows an apparatus according to the invention having one rotating part and two fixed parts.
Figure 2 shows an apparatus according to the invention having one rotating part and one fixed part.
Figure 3 shows three cylinder plates suited to form a rotating part.
Figure 4 shows an alternative embodiment of the apparatus according to the invention.
Figure 5 shows a top view of the apparatus shown in Figure 4(b).
Figure 6 is a schematic illustration of a process in which the apparatus according to the invention may be used.
Figure 7 shows a configuration comprising of the apparatus according to the invention and vessels.
Figure 8a-8c shows a distributor according to the invention
Figure 9 shows a distributor according to the invention.
Figure 10 shows a process flow scheme of a process to generate energy.

### Detailed description of the invention

In the apparatus according to the present invention the fixed part is provided with at least one inlet channel and at least one outlet channel. Preferably the fixed part is provided with at least two inlet channels and at least one outlet channels or with at least one inlet channel and at least two outlet channels. In this manner it is possible to combine two or more fluids or to split a fluid. In another embodiment the fixed part is provided with at least two inlet channels and at least two outlet channels. Preferably the number of inlet channels and outlet channels in the fixed part is equal. This enables one to direct each flow of fluid supplied to the inlet channel of the fixed part into a different outlet channel at a time. By rotation of the rotating part the outlet channels connected to the inlet channels continuously change. This is particularly advantageous in a configuration described below.

The rotating part is rotatably positioned relative to the fixed part such that the rotating part can have multiple rotational positions relative to the fixed part. Suitably the rotating part can rotate continuously in one direction around its axis of rotation. Positioning of the rotating part relative to the fixed part is suitably achieved such that fluid exiting the channels of the fixed part and entering the channels of the rotating part do not or almost not enter the space between the rotating part and the fixed part. This can be achieved by minimising the distance between fixed and rotating part to such a distance wherein rotation remains possible. Optionally the facing surfaces of the fixed and rotating part may be provided with a film or liquid to reduce friction and enable rotation.

The rotating part is provided with at least a connecting channel having an inlet and outlet opening in the rotating part. The number of connecting channels will relate to the number of inlet and outlet channels in the fixed part and to the possible combinations between inlet and outlet channels. For example when the number of inlet and outlet channels is 2 it may be advantageous to have 4 connecting channels.

The inlet and outlet opening of at least one connecting channel in the rotating part aligns with the facing openings of at least one inlet and outlet channel in the fixed part in at least one rotational position. With align is here meant that a flow of fluid is possible from the inlet channel in the fixed pat to the inlet opening of the connecting channel in the rotating part and/or a flow is possible from the outlet opening of the connecting channel to the inlet opening of the outlet channel.

In at least one other rotational position the inlet and outlet opening of the connecting channel in the rotating part are not aligned with the same facing openings of the inlet and outlet channel in the fixed part. By not aligned is here meant that no flow of fluid is possible via the inlet channel, the connecting channel and the outlet channel.

Preferably the fixed part is provided with m inlet channels and m outlet channels and wherein each inlet and outlet channel has a facing opening facing the rotating part, wherein the rotating part is provided with m² connecting channels, each connecting channel having an inlet and outlet opening in the rotating part, wherein the inlet opening of at least one connecting channel in the rotating part aligns with the facing opening of one inlet channel in the fixed part and wherein the outlet opening of the connecting channel aligns with the facing opening of an outlet channel in at least one rotational position and wherein in at least one other rotational position the same inlet opening of the connecting channel in the rotating part is aligned with a facing opening of a different inlet channel and aligned with a facing opening of a different outlet channel. m is 2 or more, suitably 4 or more. The maximum value for m will depend on the ability in the rotating member to accommodate for the resulting high number of connecting channels.

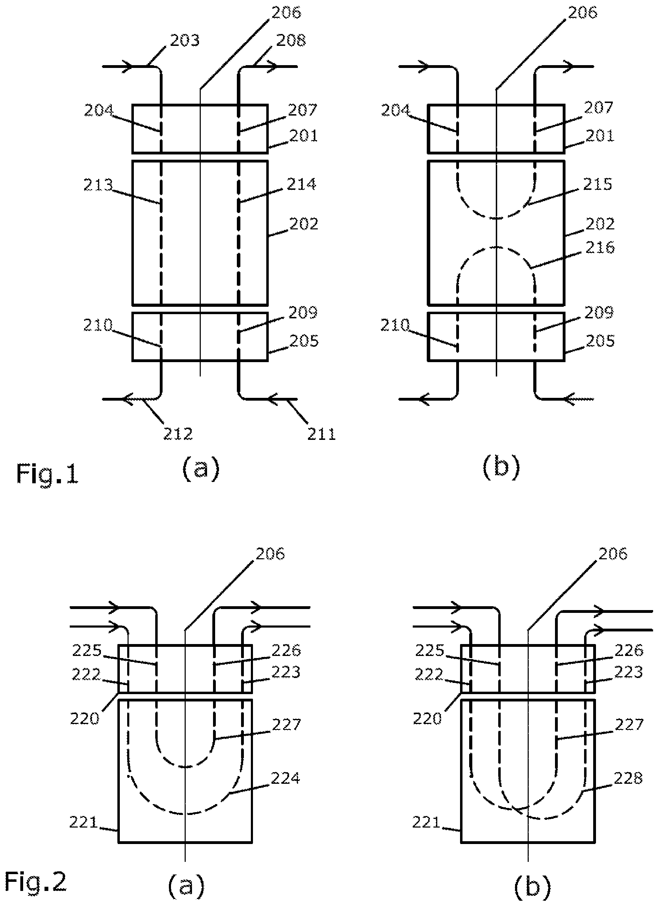

The rotating part may have a cylindrical shape. The fixed part or fixed parts are positioned axial relative to the rotating part at one side or at both sides as illustrated in Figure 1 and 2. In Figure 1 a cylindrical shaped rotating part 202 is shown. Part 202 is able to rotate around axis 206. At both ends in the axial direction a fixed part 201 and 205 is positioned. Fixed part 201 is provided with an inlet channel 204 and an outlet channel 207. Inlet and outlet channels 204 and 207 are connected to inlet conduit 203 and outlet conduit 208. Fixed part 201 cannot rotate around axis 206. Fixed part 205 is provided with an inlet channel 209 fluidly connected to an inlet conduit 211 and with an outlet channel 210 fluidly connected to an outlet conduit 212. Also fixed part 205 cannot rotate around axis 206.

Fig 1(a) shows a connecting channel 213 in rotating part 202 connecting inlet channel 204 with outlet channel 210 and connecting channel 214 in rotating part 202 connecting inlet channel 209 with outlet channel 207. In Fig 1(b) the same apparatus as in Fig. 1(a) is shown wherein rotating part 202 is in a different rotational position. In this position different connecting channels align with inlet channels 204, 209 and with outlet channels 207 and 210 respectively. Fig. 1(b) shows connecting channel 215 in rotating part 202 connecting inlet channel 204 with outlet channel 207 and connecting channel 216 in rotating part 202 connecting inlet channel 209 with outlet channel 210.

Fig 2 shows an apparatus wherein one fixed part 220 is positioned axial relative to the rotating part 221 and at one side of the rotational part 221. In Fig. 2(a) inlet channel 222 is connected to outlet channel 223 via connecting channel 224 and inlet channel 225 is connected to outlet channel 226 via connecting channel 227. In Fig 2(b) the same apparatus as in Fig. 2(a) is shown wherein rotating part 221 is in a different rotational position. In this position different connecting channels align with inlet channels 222, 225 and with outlet channels 226 and 223 respectively. Fig. 2(b) shows connecting channel 227 in rotating part 221 connecting inlet channel 220 with outlet channel 226 and connecting channel 228 in rotating part 221 connecting inlet channel 225 with outlet channel 223. Figure 2 also shows inlet and outlet conduits as in Figure 1.

One can imagine that the design of the rotating part as illustrated in Figures 1 and 2 may become very complex when the number of connecting channels is increased. Applicants found it possible to design such a network of connecting channels using the currently available computational power. Manufacture of such a rotating part is however not straightforward because of the 3-dimensional route each connecting channel may have in the rotating part. One method of manufacture is by means of 3-dimensional printing, for example by means of stereolithography, polymer jetting, jetted wax and fused deposition. 3D printing enables one to make the complex rotating part. Possible materials are polymers and metals. The fluid distributing apparatus according to the claimed invention enables one to manufacture the complex rotating part wherein the above cylindrical rotational part is comprised of two or more cylindrical layers piled up along the axis of rotation and wherein the connecting channels are formed by openings in the cylindrical layers. The separate cylindrical layers can be manufactured by mechanical working such openings in solid cylindrical plates having a certain thickness or by using moulds. By piling the thus obtained cylindrical plates a cylindrical rotational part may be obtained having the complex design of the connecting channels.

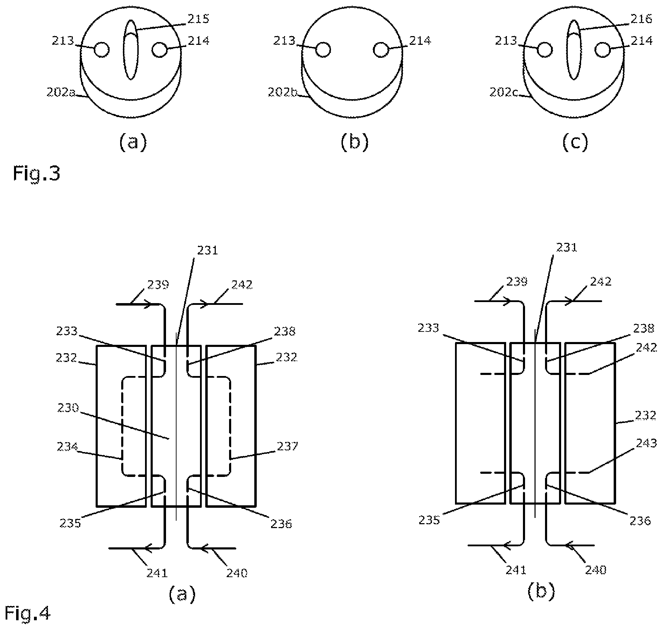

The above is illustrated by Figure 3 showing three cylindrical plates 202a, 202b and 202c which, when piled up to one cylindrical object, form the cylindrical rotational part 202 of Figure 1. Cylindrical plate 202a has two openings, for example bored openings. One opening is part of connecting channel 213 and one opening is for connecting channel 214. Furthermore a slot is shown which forms connecting channel 215. Intermediate cylindrical plate 202b shown in Figure 3(b) only has openings for connecting channels 213 and 214. Finally cylindrical plate 202c is provided with two openings for connecting channels 213 and 214 and a slot for connecting channel 216. Plates 202a, 202b and 202c are oriented relative to each other in the resulting rotating part 202 wherein connecting channels 213 and 214 form. The openings may be circular as shown or alternately have an oval shape to allow a somewhat longer time at which the facing openings align with the connecting channels.

Figure 4 shows an alternative embodiment for the apparatus wherein the fixed part 230 has a cylindrical shape positioned along the axis of rotation 231 of the rotating part 232 and wherein the rotating part 232 has a tubular shape positioned radially outward from the fixed part 230. Fixed part 230 cannot rotate around axis 231. In this configuration the rotating part 232 rotates around the fixed part 230. In Fig. 4(a) connecting channel 234 connects inlet channel 233 with outlet channel 235 and connecting channel 237 connects inlet channel 236 with outlet channel 238. Inlet channels 233 and 236 in the fixed part 230 are connected to inlet conduits 239 and 240 respectively. Outlet channels 235 and 238 in the fixed part 230 are connected to outlet conduits 241 and 242 respectively.

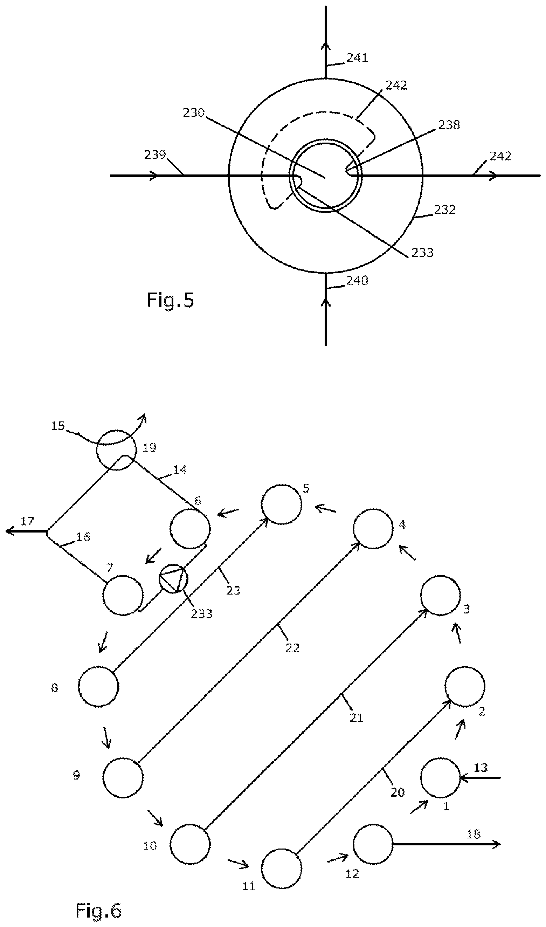

In Fig. 4(b) the same apparatus as in Fig. 4(a) is shown wherein rotating part 232 is in a different rotational position. This different position results in that connecting channel 242 connects inlet channel 233 with outlet channel 238 and connecting channel 243 connects inlet channel 236 with outlet channel 235. In Figure 4(b) connecting channels 242 and 243 run through the tubular rotating part along a circular path which is more clearly understood when viewing Fig. 5. In Fig. 5 the apparatus of Figure 4(b) is shown from above. In this representation it is seen how the connecting channel 242 runs through the rotating part 232.

The tubular rotating part 232 illustrated in Figures 4 and 5 may be manufactured similar to the manufacture of the cylindrical rotating part of Figures 1 and 2 as described above, i.e. by combining two or more tubular layers radially positioned relative to each other with respect to the axis of rotation and wherein the connecting channels are formed by openings in the tubular layers.

Suitably the rotating part is mechanically connected to an external driving means for achieving the rotational movement when in use. Examples of suitable driving means are electrically driven motors, hydraulically driven motors and fuel combustion driven motors.

The fluid distributing apparatus according to the invention may be used to distribute any type of fluid. Examples of fluids which may be used as the feed are liquid fluids, gaseous fluids, evaporating liquids, condensing gasses, their mixtures and the foregoing in admixture with solids. Applications for this distributor may for example be in analytical chemistry and separation technology. In analytical chemistry the apparatus may be used to split a stream exiting a gas chromatograph.

Applicants found that the apparatus may be advantageously be used to connect a number of vessels and more preferably be used in a process described below. Preferably the fixed part or parts are provided with an inlet channel to receive a feed gas, one or more inlet channels to receive gas having varying pressures, an inlet channel to receive pressurised gas and an outlet channel to discharge the feed gas, one or more outlet channels to discharge gas having varying pressures and an outlet channel to discharge gas to a heat exchanger and wherein the rotating part is provided with connecting channels to, at one rotational position, connect
- the inlet channel to receive a feed gas to an outlet channel,
- the one or more inlet channels to receive gas having varying pressures to one or more outlet channels and to the outlet channel to discharge gas to a heat exchanger, and
- the inlet to receive pressurised gas from a heat exchanger to an outlet channel.

The channels in the rotating part may be configured such that when starting from a starting position and rotating the rotating part to a next rotational position each inlet channel in the fixed part is fluidly connected to a different outlet channel in the fixed part for part of the rotation or for a full rotation.

The apparatus may connect one or more configurations of 2n+4 or more vessels, wherein n is 2 or more, each vessel having an inlet and an outlet connected to the fixed part of the apparatus. Suitably the apparatus further connects, one vessel with the inlet of a heat exchanger, one vessel with the outlet of the heat exchanger, one vessel with the inlet channel to receive a feed gas and one vessel with an inlet to supply a purging gas and an outlet to discharge the purging gas. The index n may be from 2 and up to 500 and suitably n is at least 4. The number of vessels connected by one apparatus may range up to 1000. The invention is also directed to a system comprising an apparatus as here described and a heat exchanger.

The invention is directed to the following process. Process to obtain a continuous flow of compressed gas starting from a feed gas having a lower pressure by performing the following steps:
(i) increasing the pressure and temperature of a gas having an intermediate pressure by means of indirect heat exchange in a heat exchanger against a fluid having a higher temperature to obtain a gas high in pressure and temperature,
(ii) obtaining part of the gas high in temperature and pressure as the compressed gas,
(iii) using another part of the gas high in temperature and pressure as a driving gas to increase the pressure of the feed gas in n-levelling stages to obtain the gas having an intermediate pressure for use in step (i) and continuing said sequence of adding part of the remaining driving gas to the gas obtained in the previous stage for the remaining (n-2) levelling stages and adding the then remaining driving gas to the feed gas in the first levelling stage,
   wherein the process is performed in a configuration of 2n+4 or more interconnected vessels each in a different state, the different states are State 1 to State 2n+4 according to:
   State 1 is a filling state,
   State 2 to State (n+1) is a state wherein the content of the vessel increases in pressure by levelling,
   State (n+2) is a state wherein the content of the vessel is provided to a heat exchanger,
   State (n+3) is a low pressure outlet state wherein the vessel receives the content the heat,
   State (n+4) to State (2n+3) are states wherein a part of the content of the vessel in State (n+4) to State (2n+3) is used to level with the vessels in State 2 to Sate (n+1) as in step (iii) of the process according to the invention, and
   State (2n+4) wherein the remaining driving gas is discharged from the vessel,
   and wherein a fluid distributor apparatus according to the invention is used to continuously change the state of each vessel to a next state and provide the required gas transport between the vessels, to receive the feed gas and to discharge and receive gas to and from the heat exchanger such that steps (i)-(iii) are continuously repeated and a continuous flow of compressed gas is obtained.

When the vessels change from state the vessels which were in state (n+2) and state (n+3) will be temporarily disconnected from the heat exchanger. In this time period a gas having a high temperature and pressure will develop in the enclosed heat exchanger and can be discharged as the product gas.

The above process is advantageous because a compressed gas can be obtained starting from a feed gas making use of the energy contained in the fluid having a higher temperature. This source of energy is different from the rotational energy required to operate a compressor, which is either electrically powered or coupled to an expander as in US-A-2011/0088404. Fluids having an elevated temperature for use in step (i) may be exhaust gasses from other processes, exhaust gas from a melting furnaces, gas turbine, gas or diesel engines, incinerators or combinations of said fluids either used in admixture or sequential. A possible fluid may be a flue gas, optionally partially, generated by on-purpose combustion of a fuel. Possible fuels are hydrogen, synthesis gas or solid, fluid or gaseous carbonaceous fuels, for example natural gas, refinery off-gas, a biomass solid, fluid or gas fuel, a domestic waste fuel, crude oil derived fuel, e.g. kerosene, diesel fuel or bunker fuel. Suitably a mixture comprising an exhaust gas from another process and the combustion gasses generated by this on-purpose combustion of a fuel is used as the fluid having the elevated temperature in step (i). Alternatively the fluid having an elevated temperature may also be a liquid, for example a hydrocarbon, water or their mixtures as obtained from sub-surface formations and having an elevated geothermal temperature.

The feed gas is preferably an oxygen comprising gas for use as feed component of a combustor as part of a gas turbine. In this preferred embodiment part of the fluid having a higher temperature is comprised of the exhaust gas of the expander of the gas turbine.

The temperature of the feed gas is suitably as low as possible, preferably below 50 ºC and even more preferably below 20 ºC. Low temperature is advantageous because it increases the capacity of a given apparatus in which the above process can be performed. The pressure of the feed gas may be between 0.1 and 0.6 MPa. If the feed gas is an oxygen comprising gas for use as feed component of a combustor as part of a gas turbine it is preferred that the feed gas has a pressure of between 0.11 and 0.6 MPa, preferably obtained in a compressor.

The gas having an intermediate pressure as used in step (i) may have a pressure of between 0.2 and 5 MPa or between 0.2 and 3 MPa. In step (i) the pressure and temperature of a gas having an intermediate pressure is increased by means of indirect heat exchange against the fluid having a higher temperature to obtain a gas high in pressure and temperature. This indirect heat exchange may be performed by processes well known to the skilled person. Preferably the gas having an intermediate pressure is kept within an enclosed space for a certain period of time wherein the heat exchange is performed such to more optimally increase both temperature and pressure in step (i). The temperature of the fluid may be between 100 and 1000 ºC, suitably between 175 and 850 ºC and preferably between 250 and 400 ºC.

In step (ii) part of the gas high in temperature and pressure is obtained as the compressed gas. The pressure of the compressed gas is suitably between 0.14 and 5MPa or between 0.14 and 3 MPa. The temperature is suitably between 50 and 550 ºC. The pressure increase may be between 0.04 and 5Mpa or between 0.04 and 2.5 MPa. By increasing the number of levelling stages it is possible to achieve higher increases in pressure.

In step (iii) another part of the gas high in temperature and pressure is used as a driving gas to increase the pressure of the starting gas in one or more stages to obtain the gas having an intermediate pressure for use in step (i). With the term 'driving gas' is here meant a gas having a higher pressure which is mixed with a gas having a lower pressure. With the term 'using as driving gas' is meant that the driving gas is added to another gas having a lower pressure resulting in a mixed gas composition having a pressure between the pressure of the driving gas and the pressure of the other gas. Preferably the pressure of the starting gas is increased in step (iii) in n levelling stages, wherein n is 2 or more. In this process part of the driving gas is added to the gas obtained in the (n-1)th levelling stage to increase the pressure of said gas in the nth levelling stage to obtain the gas having an intermediate pressure. Part of the remaining driving gas is added to the gas obtained in the (n-2)th levelling stage in the (n-1)th levelling stage. This sequence of adding part of the remaining driving gas to the gas obtained in the previous stage is continued for the remaining (n-2) levelling stages and adding the then remaining .driving gas to the starting gas in the 1st levelling stage. If in the above process driving gas remain after performing this 1st levelling stage it is suitably discharged.

State (n+4) to State (2n+3) are states wherein a part of the content of the vessel in State (n+4) to State (2n+3) is used to level with the vessels in State 2 to State (n+1). Because levelling suitably is performed making use of the pressure difference a vessel in State (n+4) will level with the vessel in State (n+1), the vessel in State (n=5) will level with the vessel in State (n), wherein this is repeated until the vessel in State (2n+3) levels with the vessel in State (2).

The number n is suitably from 2 to and including 50 and preferably from 4 to and including 20.

Preferably steps (i)-(iii) are continuously repeated to obtain a continuous flow of compressed gas. Preferably one cycle of steps (i)-(iii) is performed between 1 and 2000 times per minute.

The above process is illustrated by Figure 6, which shows for a configuration in which simultaneously 4 levelling stages take place (n=4). The situation for a single cycle is shown. In Figure 6 a feed gas 13 is added to a vessel 1 in State 1. Part of the remaining driving gas of vessel 11 in State 11 is added via connecting conduit 20 to vessel 2 in State 2 in first levelling stage thereby increasing the pressure of the gas in vessel 2. Part of the remaining driving gas of vessel 10 in State 10 is added via connecting conduit 21 to the vessel 3 in State 3 in a second levelling stage. Part of the remaining driving gas in vessel 9 in State 9 is added via connecting conduit 22 to the vessel 4 in a third levelling stage. Part of the remaining driving gas in the vessel 8 is added via connecting conduit 23 to the vessel 5 in a fourth levelling stage. In the same cycle the contents of the vessel 6 in State 6 is increased in temperature by discharging the contents of said vessel via conduit 14 to an indirect heat exchanger 19 wherein the gas is heated against fluid 15 to obtain a gas 16 high in temperature and pressure. The vessel 7 in State 7 is filled with the gas 16 high in temperature and pressure. Part 17 of the resulting gas high in temperature and pressure is discharged as the compressed gas. From the vessel 12 in State 12 the remaining driving gas 18 is discharged from the vessel. In a next cycle this specific vessel will change to State 1 and is ready to be filled again. Simultaneously the state of all the remaining vessels will change to the next state. In such a cycle the vessels move one position counter clockwise in Figure 6, as illustrated by the arrows, wherein the supply, discharge and connecting conduits 13, 14, 16, 17, 18, 20, 21, 22 and 23 remain in position. This means that in a next cycle step the supply, discharge and connecting conduits 13, 14, 16, 17, 18, 20, 21, 22 and 23 physically connect to a different vessel. By performing these cycles one after the other a continuous process is obtained to increase the pressure of the feed gas.

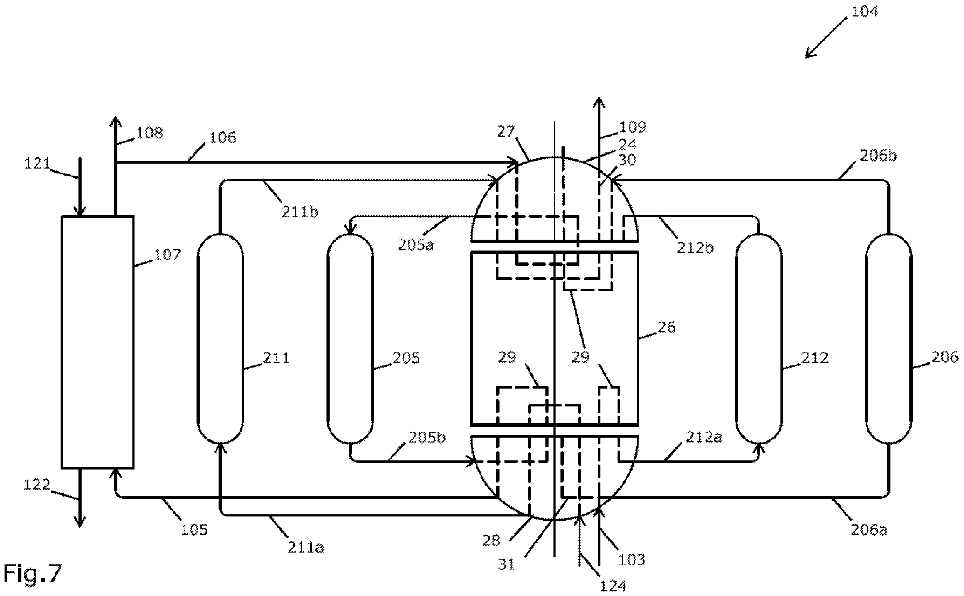

The fluid distributing apparatus according to the invention is capable of continuously connecting the connecting conduits 13, 14, 16, 17, 18, 20, 21, 22 and 23 to different vessels as illustrated in Fig. 7. Figure 7 shows a configuration 104 consisting of a fluid distributor apparatus 24, interconnected vessels 211, 205, 212 and 206 and a heat exchanger 107. Vessel 212 is operating in State 1 (figure 1), vessel 211 is operating in State 12 (figure 1), vessel 205 is operating in State 6 (figure 1) and vessel 206 is operating in state 7 (figure 1). Vessels operating in other states illustrated in Figure 6 are not shown in Figure 7 for clarity reasons.

Each vessel 211, 205, 212 and 206 has an inlet and an outlet conduit connected to distributer 24 by means of lines 211a, 211b, 205a, 205b, 212a, 212b, 206a and 206b respectively. The fixed part of distributer 24 is provided with an inlet to receive a feed gas as supplied via line 103 and an outlet to discharge a compressed gas via line 108. The fixed part of distributor 24 has an inlet and outlet connected to an outlet and inlet of a heat exchanger 107 via lines 106 and 105 respectively. The fixed part of distributor 24 has an outlet to discharge a remaining driving gas via line 109 and an inlet to supply a purging gas via line 124.

The distributor 24 has a rotating part 26 and two fixed parts 27, 28 at its two opposite ends along the axis. The rotating part 26 is suitably a cylindrical part. The rotating part 26 is provided with connecting channels 29. The rotating part 26 is rotationally moveable relative to the two fixed parts. Preferably the rotating part 26 rotates within a housing (not shown). The, preferably tubular, housing connects the first and second fixed parts 27 and 28. The first and second fixed parts 27, 28 are provided with inlet and outlet channels 30, 31 connected to the inlet and outlet conduits at one end and to connecting channels 29 at their other ends. In this manner the inlet channels 30 of fixed part 27 communicate with the outlet channels 30 of the same fixed part 27 via the connecting channels 29 present in the rotating part 26 at a certain rotational position of the rotating part 26 relative to the fixed part 27.

In Figure 7 it is shown that distributor 24 fluidly connects the inlet line for feed gas 103 with a vessel 212 via one of the inlet channels 31 in fixed part 28, one of the connecting channels 29 in rotating part 26, one of the outlet channels 31 in fixed part 28 and line 212a. Via these lines vessel 212 is filed with the feed gas. Figure 7 also shows that the content of vessel 205 is discharged via line 205b, one of the inlet channels 31 in fixed part 28, one of the connecting channels 29 in rotating part 26, one of the outlet channels 31 in fixed part 28 and line 105 to heat exchanger 107. The heated and pressurised gas as discharged via line 106 is subsequently returned to a different vessel 206. Figure 7 also shows how part of the gas is discharged from the heat exchanges 107 via line 108. The remaining compressed gas in vessel 206 is used as driving gas in a next rotational position of rotational part 26, thereby connecting the outlet of vessel 206 via line 206b, the inlet and outlet channels 30 of fixed part 27, one of the connecting channels 29 of rotating part 26 and a supply line to another vessel (not shown in Figure 7). Figure 7 also shows how vessel 211 is emptied from any remaining driving gas by flushing with a purging gas supplied via line 124, one of the inlet and outlet channels 31 in fixed part 28, one of the connecting channels 29 in the rotating part 26 and line 211a. The remaining driving gas and the purging gas are discharged from vessel 211 via lines 211b, one of the inlet and outlet channels 30 in fixed part 27, one of the connecting channels 29 in the rotating part 26 and line 109. By rotating the rotating part 26 to a next position different connections are made such that the vessels of the configuration move up one stage until they reach the final stage after which they start again at stage 1. Suitably every vessel of the configuration will pass all states per full rotation of the rotating part 24. Thus a vessel will return to its initial state when the rotating part 26 is rotated 360º.

The fluid distributor 24 of Figure 7 can be scaled up for a larger capacity. At a certain capacity the distributor will become too large to efficiently distribute the gasses as explained above. In such a situation it may be advantageous to scale up the vessels, such as the vessels 107, 211, 205, 212 and 206 as shown in Figure 7, and use multiple fluid distributors 24 operating in parallel and in synchronisation with each other. In that manner one larger vessel is connected to another larger vessel via more than one fluid distributor at one moment in time. The vessels are thus interconnected via more than one distributor and the distributors are configured in parallel relative to each other.

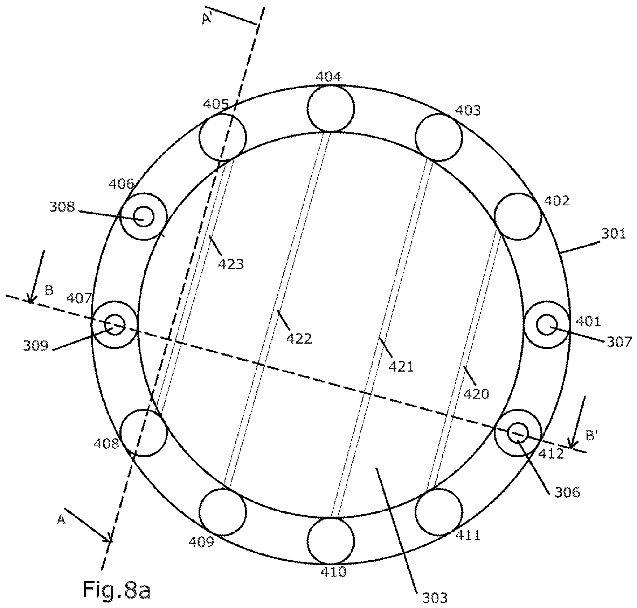

The vessels and distributor illustrated in Figure 7 may also be combined in one apparatus as will be illustrated in Figure 8a-c. Such an apparatus may be an apparatus according to the invention, wherein the connecting channels run parallel with the axis of rotation having an inlet at one end and an outlet at its opposite end and wherein the connecting channels have a larger cross-sectional area than the cross-sectional area of the inlet and outlet channels present in the fixed part or parts. By choosing such a larger cross-sectional area the connecting channels may function as the vessels illustrated in Figures 6 and 7.

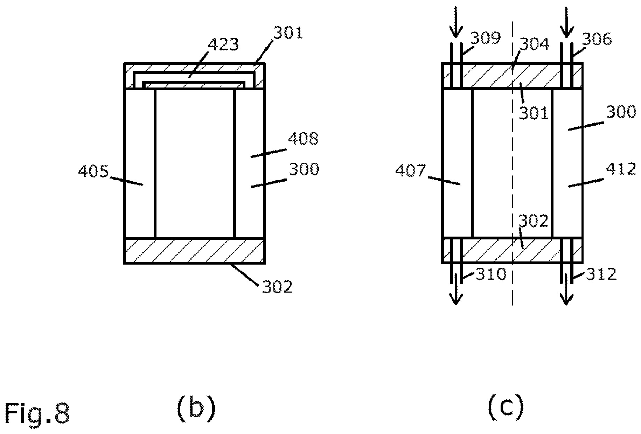

Figure 8a shows a top view of such an apparatus suited to perform the process illustrated in Figure 6 wherein n is 4. Figure 8b shows the cross-sectional view AA' of Figure 8a. Figure 8c shows the cross-sectional view BB' of Figure 8a. The connecting channels in the rotating part 300 are elongated vessels 401-412 positioned parallel with respect to each other and in a circle around its axis of rotation 304 (see Figure 8c). Vessels 401-412 correspond with vessels 1-12 of Figure 6. In Figure 8a vessels 401-412 and channels 420-423 are drawn in their respective positions for illustration purposes. In an actual top view these vessels and channels would not be visible. Each vessel 401-412 is provided with an inlet and an outlet at its opposite ends. The fixed part 301 is provided with an inlet channel 307 to provide the feed gas to vessel 401. The fixed part 301 or the opposite fixed part 302 is also provided with connecting channels 420, 421, 422 and 423. These channels are present in either fixed parts 310 or 302 and connect vessels 402 with 411, 403 with 410, 404 with 409 and 405 with 408 respectively. Alternatively connecting channels 420, 421, 422 and/or 423 may also be present in both fixed parts 301 and 302. In such a configuration a closed gas loop may be formed comprising a first vessel 405, a connecting channel in upper fixed part (as shown in Figure 8b) 301, a second vessel 408 and a connecting channel in the bottom fixed part 302. This may be advantageous to level even more rapidly the pressures in vessels 405 and 408. Thus in one embodiment some of the channels may be present in one fixed part and the remaining channels may be present in the opposite fixed part or the channels are in both fixed parts forming a closed loop. Alternatively all channels may be present in only one of the fixed parts.

In Figure 8a it is further shown that the inlet channel (not shown) and the outlet channel 308 of vessel 406 is fluidly connected to a heat exchanger as in Figure 6. The inlet channel 309 and outlet channel 310 (see Figure 8c) of vessel 407 is also connected to a heat exchanger as in Figure 6.

In Figure 8b it is shown how connecting channel 423 in fixed part 301 connects vessels 405 and 408. This connecting channel 423 enables a pressure levelling between vessels 405 and 408. Because of this channel 423 and the remaining channels 420-422 4 levelling stages can be performed with the illustrated apparatus. In Figure 8b vessels 405 and 408 are part of the rotating part 300.

Figure 8c shows inlet channel 309 in fixed part 301 and outlet channel 310 in fixed part 302 aligned with the inlet and outlet openings of vessel 407. Inlet channel 309 and outlet channel 310 are in turn connected to a heat exchanger as in Figure 6. Vessel 412 is connected to an inlet channel 306 in fixed part 301 to receive a purge gas and an outlet channel 312 to discharge the content of vessel 412 together with the purge gas. In Figure 8c vessels 407 and 412 are part of the rotating part 300. By rotating the configuration of vessels 401-412 forming the rotating part 300 along axis 304 the openings of the vessels will align with different inlet, outlets and connecting channels in the two fixed parts and a process as described above can be performed.

The invention is thus also directed to an apparatus according wherein the connecting channels in the rotating part 300 are elongated vessels 401-412 positioned parallel with respect to each other and in a circle around its axis of rotation 304, each vessel provided with a two openings its opposite ends and wherein at one rotational position
a fixed part 301 is provided with an channel 307 to provide a feed gas to one of the vessels 401,
a fixed part 301 or 302 is provided with a connecting channel 420, 421, 422, 423 connecting the opening of a first vessel 402, 403, 404, 405 with the opening a second vessel 411, 410, 409, 408 respectively,
the fixed part 301 or 302 is provided with a channel 308 to discharge gas from a vessel 406 to for example a heat exchanger and a channel in the opposite fixed part to provide gas to this vessel 406,
the fixed part or parts 301 or 302 is provided with a channel 309 to provide gas from for example this heat exchanger to a vessel 407 and with a channel in the opposite fixed part to discharge gas from this vessel 407,
the fixed part 301 or 302 is provided with a channel 306 to receive a purge gas to one vessel 412 and an outlet channel 312 in the opposite fixed part to discharge the purged gas from this vessel 412.

Preferably the above apparatus comprises one or more configurations of 2n+4 or more vessels, wherein n is the number of channels 420, 421, 422, 423 and is 2 or more and wherein the connecting channels 420, 421, 422, 423 provide pressure levelling between n pairs of vessels, such as first vessels 402, 403, 404, 405 with the with second vessels 411, 410, 409, 408 of Figure 8a respectively.

The fixed part may be composed of two cylindrical shaped parts and wherein the fixed parts are positioned axial relative to the rotating part at one side or at both sides as illustrated in Figure 8a or wherein the fixed has a cylindrical shape positioned along the axis of rotation of the rotating part.

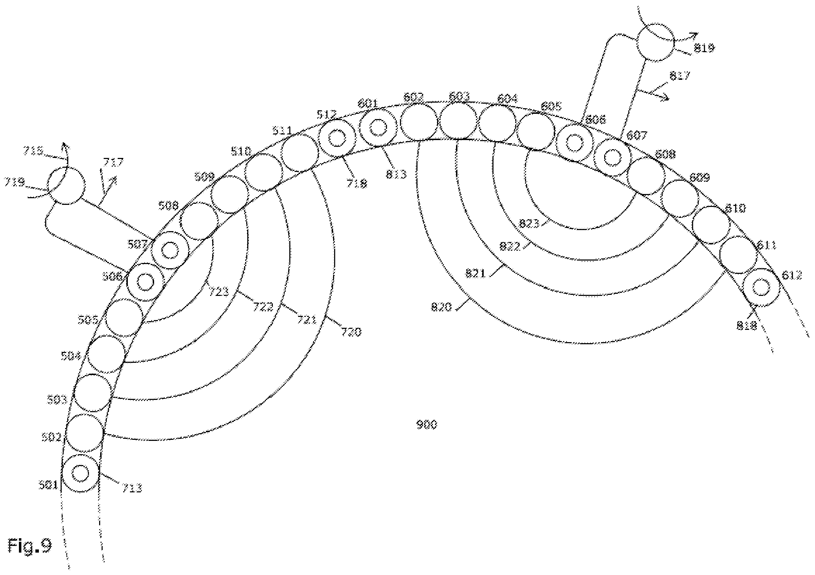

Figure 9 illustrates another embodiment of the above apparatus wherein sets of configurations having 12 vessels (n=4) are positioned along the circumferential of a large circle. Two configurations are shown by vessels 501-512 and 601-612. More configurations may be present on one circumferential and n may vary as described above. The vessels are part of the rotating part and the connections 700 and 800 and heat exchanger 719 and 819 are part of the fixed part 900 comparable to Figure 8. The vessel numbers correspond with the vessels of Figure 6 by adding 500 or 600 respectively. The connecting lines, feed lines and discharge lines in Figure 9 have the same meaning as in Figure 6 by adding 700 and 800 respectively. The connecting lines 723, 722, 721, 720 and 820, 821, 822 and 823 may be comprised of two separate channels fluidly connecting one end of a first vessel to one end of a second vessel and connecting the opposite end of the first vessel to the opposite end of the second vessel thereby forming a closed gas loop. By rotating the vessels they will change their state. For example when purged vessel 512 moves to a next position it will be fed with a pre-feed via line 813.

The embodiments of Figures 8 and 9 may also be described by the following fluid distributing apparatus comprising a fixed part and a rotating part, wherein
the rotating part is rotatably positioned relative to the fixed part such that the rotating part can have multiple rotational positions relative to the fixed part,
wherein the rotating part is provided with 2n+4 elongated vessels, or sets of 2n+4 elongated vessels, having a larger cross-sectional area than the cross-sectional area of the inlet and outlet channels present in the fixed parts and wherein the vessels have an inlet and outlet opening at their opposite ends and wherein the elongated vessels run parallel with the axis of rotation and positioned along the circumference of a circle,
the fixed part is provided with an channel to provide a feed gas to one the vessels,
the fixed part is provided with n connecting channels, each connecting channel fluidly connecting the opening of an elongated vessel with the opening of another elongated vessel,
the fixed part is provided with a channel to discharge gas from an elongated vessel to a heat exchanger and provided with a channel to provide gas to this vessel,
the fixed part is provided with a channel to provide gas from the heat exchanger to a vessel and provided with a channel to discharge gas from this vessel,
the fixed part is provided with a channel to receive a purge gas to one vessel and provided with an outlet channel to discharge the purged gas from this vessel, and
wherein the inlet and outlet opening of at least one elongated vessel in the rotating part aligns with the facing openings of at least one inlet and outlet channel in the fixed part in at least one rotational position and wherein in at least one other rotational position the inlet and outlet opening of the elongated vessel in the rotating part is not aligned with the same facing openings of the inlet and outlet channel in the fixed part.

The single fixed part referred to above may be comprised of two parts as in Figure 8. The fixed part may also be a group of conduits having openings aligned with the openings of the elongated vessels. The openings at the opposite ends of the vessels may be at their ends or present in the side walls of the vessels near their ends. One connecting channel may be comprised of two separate channels fluidly connecting one end of a first vessel to one end of a second vessel and connecting the opposite end of the first vessel to the opposite end of the second vessel thereby forming a closed gas loop. It may also be conceived that the above described rotating part is fixed and the fixed parts rotates.

The invention is also directed to a process to generate electrical power by means of a gas turbine, wherein said gas turbine uses a fuel and compressed oxygen comprising gas as feed and wherein the following steps are performed,
(a) compressing an oxygen comprising gas by means of a compressor,
(b) further compressing said oxygen containing gas by means of a process as described above,
(c) combusting the fuel with the compressed oxygen containing gas obtained in step (b) to obtain a pressurised combustion gas and
(d) expanding said combustion gas in an expander of a gas turbine generating electrical power.

Preferably a stream of expanded flue gas is obtained in step (d) and wherein this flue gas is used to increase the temperature of the compressed oxygen gas by means of indirect heat exchange prior to performing step (c).

Preferably step (b) is performed by compressing said oxygen containing gas by means of a process according to the present invention, and wherein the remaining driving gas is combined with the flue gas after being reduced in temperature by means of the heat exchange and wherein the resulting combined gas flow is used as the fluid having a higher temperature in step (i). Preferably the combined gas flow is increased in caloric value prior to be used as the fluid having a higher temperature in step (i) by mixing said combined gas flow with an exhaust gas of another process or by combusting an additional fuel. The additional fuel may be any gaseous, liquid or solid fuel, such as for example natural gas, synthesis gas, hydrogen, refinery off-gas, a biomass solid, such as wood, a domestic waste fuel and crude oil derived fuel, e.g. kerosene, diesel fuel or bunker fuel.

The fuel used in step (c) may suitably be the same as the above examples described for the additional fuel. Suitably the fuel used in step (c) is a gaseous or liquid fuel, such as for example natural gas, synthesis gas, hydrogen, refinery off-gas, and crude oil derived fuel, e.g. kerosene, diesel fuel or bunker fuel. Even more preferably the fuel is a gaseous fuel, suitably natural gas, synthesis gas, hydrogen and/or refinery off-gas.

The synthesis gas described above may be obtained by gasification of coal or residual fractions derived from a crude oil. The hydrogen may be obtained by subjecting synthesis gas, such as obtained by these gasification processes, to a water-gas shift reaction.

The compressor used in step (a) may be directly coupled to the expander of the gas turbine used in step (d) or preferably connected via a gear box to the expander. This is advantageous when the fluid having a higher temperature as used in the process comprises heated gasses obtained from another process. The compressor may also be driven independently from the gas turbine, for example an electrically driven compressor may be used. The mass flow of such, for example exhaust, gasses may vary and thus the capacity to increase the pressure and temperature may vary. By being able to control the compressor independently from the expander such variations can be compensated for in an easier manner.

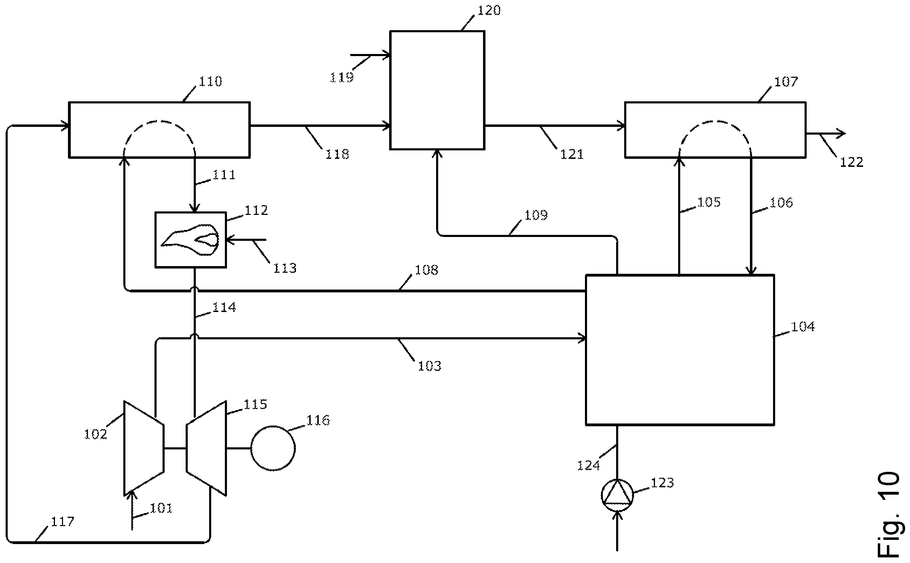

The above process will be illustrated by Figure 10. To a compressor 102 an oxygen comprising gas 101, for example air, is supplied to obtain a partly compressed flow 103. This partly compressed gas flow 103 is further compressed in a configuration 104, which is a configuration as described above and illustrated by Figures 6-9. In Figure 10 this configuration 104 is not drawn in detail for clarity reasons. Figure 10 shows flow lines 105 for transport of the contents of a vessel in State (n+2) to a heat exchanger 107 and flow line 106 from heat exchanger 107 to a vessel in State (n+3). Through line 108 a flow of the resulting gas high in temperature and pressure is discharged. To empty the vessel in State (2n+4) from any remaining driving gas just before fresh gas 103 is provided a fan 123 is used to which intake air pushes the remaining driving gas as flow 124 from configuration 104 as flow 109.

The gas 108 is further increased in temperature in heat exchanger 110 to obtain a heated gas 111. The compressed and heated oxygen in heated gas 111 is used to combust a fuel 113 in a combustor 112 to obtain a pressurised combustion gas 114. The pressurised combustion gas 114 is expanded in expander 115 to generate power, e.g. electricity by operating a generator 116. The stream of expanded flue gas 117 thus obtained has a high temperature level. The expanded flue gas 117 is used to increase the temperature of the gas 108 by indirect heat exchange in heat exchanger 110 thereby obtaining heated gas 111 and a stream of exhaust gas 118 having a lower temperature than expanded flue gas 117. In Figure 10 this exhaust gas 118 is combined with the remaining driving gas 109 and with an optional flow 119, which may be the exhaust gas of another process in mixer 120. The resulting combined flow 121 is used as the fluid having a higher temperature in heat exchanger 107. Optional flow 119 may also be first used to increase the temperature level of gas 108 before being combined with exhaust gas 118.

The process to obtain a compressed gas and its application in a process to generate electrical energy according to the invention may find application in air separation processes, classical energy producing industry, domestic energy production, energy and heat co-generation processes, automotive and marine, for example automotive or marine hybrid engine applications, power generation from high energy streams as present in chemical and refinery processes, for example steam cracking processes, delayed coking processes and gasification processes, cement process, carbon black reactors, iron reduction process, steel soaking pits, incinerators, dryers, aluminium dry hearth melting processes, copper scrap remelt furnaces, aluminium scrap remelt processes, after burner processes, regenerative thermal oxidizers and in power generation applications where a steam cycle is not desired, such as for example in off-shore applications.

## Claims

1. Fluid distributing apparatus comprising a fixed part (201,205,220) and a rotating part (202,221), wherein
the fixed part (201,205,220) is provided with at least two inlet channels (204, 209,222,225) and at least two outlet channels (210, 207,226,223) and wherein each inlet (204, 209,222,225) and outlet (210, 207,226,223) channel has a facing opening facing the rotating part (202,221),
the rotating part (202,221) is rotatably positioned relative to the fixed part (201,205,220) such that the rotating part (202,221) can have multiple rotational positions relative to the fixed part (201,205,220), wherein the rotating part (202,221) is provided with at least two connecting channels (213,214,215,216,224,227,228), each connecting channel having an inlet and outlet opening in the rotating part (202,221),
wherein the inlet and outlet opening of at least one connecting channel (213,214,215,216,224,227,228) in the rotating part (202,221) aligns with the facing openings of at least one inlet (204, 209,222,225) and outlet (210, 207,226,223) channel in the fixed part (201,205,220) in at least one rotational position and wherein in at least one other rotational position the inlet and outlet opening of the connecting channel (213,214,215,216,224,227,228) in the rotating part (202,221) is not aligned with the same facing openings of the inlet (204, 209,222,225) and outlet (210, 207,226,223) channel in the fixed part (201,205,220),
wherein the inlet opening of at least one connecting channel (213,214,215,216,224,227,228) in the rotating part (202,221) aligns with the facing opening of one inlet channel (204, 209,222,225) in the fixed part (201,205,220) and wherein the outlet opening of the connecting channel (213,214,215,216,224,227,228) aligns with the facing opening of an outlet channel in the fixed part (201,205,220) in at least one rotational position and wherein in at least one other rotational position the same inlet opening of the connecting channel in the rotating part (202,221) is aligned with a facing opening of a different inlet channel in the fixed part (201,205,220) and aligned with a facing opening of a different outlet channel in the fixed part (201,205,220),
wherein the rotating part (202,221) has a cylindrical shape and wherein the fixed part (220) or fixed parts (201,205) are positioned axial relative to the rotating part (202,221) at one side or at both sides and wherein the rotating part (202,221) is comprised of two or more cylindrical layers (202a,202b,202c) piled up along the axis of rotation (206) and wherein the connecting channels are formed by openings in the cylindrical layers (202a,202b,202c).

2. Fluid distributing apparatus comprising a fixed part (230) and a rotating part (232), wherein
the fixed part (230) is provided with at least two inlet channels (233,236) and at least two outlet channels (235,238) and wherein each inlet (233,236) and outlet (235,238) channel has a facing opening facing the rotating part (232), the rotating part (232) is rotatably positioned relative to the fixed part (230) such that the rotating part (232) can have multiple rotational positions relative to the fixed part (230), wherein the rotating part (232) is provided with at least two connecting channels (234,237), each connecting channel (234,237) having an inlet and outlet opening in the rotating part (232), wherein the inlet and outlet opening of at least one connecting channel (234,237) in the rotating part (232) aligns with the facing openings of at least one inlet (233,236) and outlet (235,238) channel in the fixed part (230) in at least one rotational position and wherein in at least one other rotational position the inlet and outlet opening of the connecting channel (234,237) in the rotating part (232) is not aligned with the same facing openings of the inlet (233,236) and outlet (235,238) channel in the fixed part (230), wherein the inlet opening of at least one connecting channel (234,237) in the rotating part (232) aligns with the facing opening of one inlet channel (233,236) in the fixed part (230) and wherein the outlet opening of the connecting channel (234,237) aligns with the facing opening of an outlet channel (235,238) in the fixed part (230) in at least one rotational position and wherein in at least one other rotational position the same inlet opening of the connecting channel (234,237) in the rotating part (232) is aligned with a facing opening of a different inlet channel (233,236) in the fixed part (230) and aligned with a facing opening of a different outlet channel (235,238) in the fixed part (230),
wherein the fixed part (230) has a cylindrical shape positioned along the axis of rotation (231) of the rotating part (232) and wherein the rotating part (232) has a tubular shape positioned radially outward from the fixed part (230) and wherein the rotating part (232) is comprised of two or more tubular layers radially positioned relative to each other with respect to the axis of rotation (231) and wherein the connecting channels (234,237) are formed by openings in the tubular layers.

3. Apparatus according to claim 1 or 2, wherein the fixed part (220,230) or parts (201,205,27,28) are provided with an inlet channel (103) to receive a feed gas and an outlet channel (212a) to discharge a feed gas, one or more inlet channels (211b,205b,212b206b) to receive gas having varying pressures and one or more outlet channels (205a,212a,206a) to discharge gas having varying pressures and an outlet channel (105) to discharge gas to a heat exchanger (107) and an inlet channel (106) to receive gas from a heat exchanger (107), wherein the rotating part (26) is provided with connecting channels (29) to, at one rotational position, connect
- the inlet channel (103) to receive a feed gas to an outlet channel (212a) in the fixed part (28) to discharge a feed gas,
- the one or more inlet channels (205b,212b206b) to receive gas having varying pressures to one or more outlet channels (211a,205a) in the fixed part (27,28) to discharge the gas having varying pressures and to the outlet channel (105) to discharge gas to a heat exchanger (107), and
- the inlet (106) to receive gas from the heat exchanger (107) to an outlet channel (206a) in the fixed part (28).

4. Apparatus according to claim 3, wherein the channels (29) in the rotating part (26) are configured such that when starting from a starting position and rotating the rotating part (26) to a next rotational position each inlet channel (211b,205b,212b206b) in the fixed part (27,28) is fluidly connected to a different outlet channel (211a,205a,212a,206a) in the fixed part (27,28) up and until full rotation.

5. Apparatus according to any one of claims 3-4, wherein the apparatus connects one or more configurations comprising 2n+4 or more vessels (211,205,212,206), wherein n is 2 or more, each vessel (211,205,212,206), having an inlet and an outlet connected to the fixed part (27,28) of the apparatus.

6. Apparatus according to claim 5, wherein the apparatus further connects for each configuration, one vessel (211,205,212,206) with the inlet of a heat exchanger (107), one vessel with the outlet of the heat exchanger (107), one vessel with the inlet channel (103) to receive a feed gas and one vessel with an inlet (124) to supply a purging gas and an outlet (109) to discharge the purging gas.

7. Apparatus according to any one of claims 5-6, wherein n is between 2 and 500.

8. Apparatus according to claim 7, wherein n is at least 4.

9. Process to obtain a continuous flow of compressed gas starting from a feed gas (13) having a lower pressure by performing the following steps:
(i) increasing the pressure and temperature of a gas (14) having an intermediate pressure by means of indirect heat exchange in a heat exchanger (19) against a fluid (15) having a higher temperature to obtain a gas (16) high in pressure and temperature,
(ii) obtaining part of the gas (17) high in temperature and pressure as the compressed gas,
(iii) using another part of the gas high in temperature and pressure as a driving gas (23) to increase the pressure of the feed gas (13) in n-levelling stages to obtain the gas (14) having an intermediate pressure for use in step (i) and continuing said sequence of adding part of the remaining driving gas (22,21) to the gas obtained in the previous stage for the remaining (n-2) levelling stages and adding the then remaining driving gas (20) to the feed gas (13) in the first levelling stage, wherein the process is performed in a configuration of 2n+4 or more interconnected vessels (1-12) each in a different state, the different states are State 1 to State 2n+4 according to:
State 1 is a filling state,
State 2 to State (n+1) is a state wherein the content of the vessel increases in pressure by levelling,
State (n+2) is a state wherein the content of the vessel is provided to a heat exchanger (19) to perform step (i),
State (n+3) is a product gas discharge state wherein part of the vessel content or the content generated in the heat exchanger (19) is discharged according to step (ii) and wherein a part of the gas content generated in the heat exchanger (19) remains in the vessel,
State (n+4) to State (2n+3) are states wherein a part of the content of the vessel in State (n+4) to State (2n+3) is used to level with the vessels in State 2 to Sate (n+1) as in step (iii) of the process according to the invention, and State (2n+4) wherein the remaining driving gas (18) is discharged from the vessel, and wherein a fluid distributor apparatus according to any one of claims 1-8 is used to continuously change the state of each vessel (1-12) to a next state and provide the required gas transport between the vessels (1-12), to receive the feed gas (13) and to discharge and receive gas to and from the heat exchanger (19) such that steps (i)-(iii) are continuously repeated and a continuous flow of compressed gas (17) is obtained.

10. Process according to claim 9, wherein one cycle of steps (i)-(iii) is performed between 1 and 2000 times per minute.

11. Process according to any one of claims 9-10, wherein in step (i) the fluid having a higher temperature is a gas having a temperature of between 100 and 1000 ºC.

12. Process according to any one of claims 9-11, wherein the compressed gas is an oxygen comprising gas for use as feed component of a combustor as part of a gas turbine.

13. Process to generate electrical power by means of a gas turbine, wherein said gas turbine uses a fuel (113) and compressed oxygen comprising gas (111) as feed and wherein the following steps are performed,
(a) compressing an oxygen comprising gas (101) by means of a compressor,
(b) further compressing said oxygen containing gas (103) by means of a process according to any one of claims 9-12,
(c) combusting the fuel (113) with the compressed oxygen containing gas (108) obtained in step (b) to obtain a pressurised combustion gas (114) and
(d) expanding said combustion gas (114) in an expander (115) of a gas turbine generating electrical power.

14. Process according to claim 13, wherein a stream of expanded flue gas (117) is obtained in step (d) and wherein this flue gas (117) is used to increase the temperature of the compressed oxygen gas (108) by means of indirect heat exchange prior to performing step (c).

15. Process according to claim 14, wherein step (b) is performed by compressing said oxygen containing gas (103) by means of a process according to any one of claims 10-12, and wherein the remaining driving gas (109) is combined with the flue gas (118) after being reduced in temperature by means of the heat exchange and wherein the resulting combined gas (121) flow is used as the fluid having a higher temperature in step (i).

16. Process according to claim 15, wherein the combined gas flow is increased in caloric value prior to be used as the fluid (121) having a higher temperature in step (i) by mixing said combined gas flow with an exhaust gas (119) of another process or by combusting an additional fuel.

## Patentansprüche

1. Fluidverteilungsvorrichtung, umfassend einen feststehenden Teil (201, 205, 220) und einen rotierenden Teil (202, 221), wobei der feststehende Teil (201, 205, 220) mit mindestens zwei Einlasskanälen (204, 209, 222, 225) und mindestens zwei Auslasskanälen (210, 207, 226, 223) versehen ist und wobei jeder Einlasskanal (204, 209, 222, 225) und Auslasskanal (210, 207, 226), 223) eine dem rotierenden Teil (202, 221) zugewandte Öffnung aufweist, wobei der rotierende Teil (202, 221) relativ zum feststehenden Teil (201, 205, 220) derart drehbar positioniert ist, dass der rotierende Teil (202, 221) mehrere Drehpositionen relativ zum feststehenden Teil (201, 205, 220) einnehmen kann, wobei der rotierende Teil (202, 221) mit mindestens zwei Verbindungskanälen (213, 214, 215, 216, 224, 227, 228) versehen ist, wobei jeder Verbindungskanal eine Einlass- und Auslassöffnung im rotierenden Teil (202, 221) aufweist, wobei die Einlass- und Auslassöffnung mindestens eines Verbindungskanals (213, 214, 215, 216, 224, 227, 228) im rotierenden Teil (202, 221) mit den einander zugewandten Öffnungen mindestens eines Einlasskanals (204, 209, 222, 225) und eines Auslasskanals (210, 207, 226, 223) im feststehenden Teil (201, 205, 220) in mindestens einer Drehposition ausgerichtet ist, und wobei in mindestens einer anderen Drehposition die Einlass- und Auslassöffnung des Verbindungskanals (213, 214, 215, 216, 224, 227, 228) in dem rotierenden Teil (202, 221) nicht mit den gleichen einander zugewandten Öffnungen des Einlasskanals (204, 209, 222, 225) und des Auslasskanals (210, 207, 226, 223) im feststehenden Teil (201, 205, 220) ausgerichtet ist, wobei die Einlassöffnung mindestens eines Verbindungskanals (213, 214, 215, 216, 224, 227, 228) im rotierenden Teil (202, 221) mit der gegenüberliegenden Öffnung eines Einlasskanals (204, 209, 222, 225) im feststehenden Teil (201, 205, 220) ausgerichtet ist und wobei die Auslassöffnung des Verbindungskanals (213, 214, 215, 216, 224, 227, 228) mit der zugewandten Öffnung eines Auslasskanals im feststehenden Teil (201, 205, 220) in mindestens einer Drehposition ausgerichtet ist und wobei in mindestens einer anderen Drehposition die gleiche Einlassöffnung des Verbindungskanals im drehenden Teil (202, 221) mit einer zugewandten Öffnung eines anderen Einlasskanals im feststehenden Teil (201, 205, 220) ausgerichtet ist und mit einer zugewandten Öffnung eines anderen Auslasskanals im feststehenden Teil (201, 205, 220) ausgerichtet ist, wobei der rotierende Teil (202, 221) eine zylindrische Form aufweist und wobei der feststehende Teil (220) oder die feststehenden Teile (201) 205) axial relativ zum rotierenden Teil (202, 221) an einer Seite oder an beiden Seiten positioniert sind und wobei der rotierende Teil (202, 221) aus zwei oder mehr zylindrischen Schichten (202a, 202b, 202c) besteht, die entlang der Rotationsachse (206) gestapelt sind, und wobei die Verbindungskanäle durch Öffnungen in den zylindrischen Schichten (202a, 202b, 202c) gebildet sind.

2. Fluidverteilungsvorrichtung, umfassend einen feststehenden Teil (230) und einen rotierenden Teil (232), wobei der feststehende Teil (230) mit mindestens zwei Einlasskanälen (233, 236) und mindestens zwei Auslasskanälen (235, 238) versehen ist und wobei jeder Einlasskanal (233, 236) und jeder Auslasskanal (235, 238) eine dem rotierenden Teil (232) zugewandte Öffnung aufweist, wobei der rotierende Teil (232) relativ zu dem feststehenden Teil (230) derart drehbar positioniert ist, dass der rotierende Teil (232) mehrere Drehpositionen relativ zu dem feststehenden Teil (230) haben kann, wobei der rotierende Teil (232) mit mindestens zwei Verbindungskanälen (234, 237) versehen ist, wobei jeder Verbindungskanal (234, 237) eine Einlass- und Auslassöffnung in dem rotierenden Teil (232) aufweist, wobei die Einlass- und Auslassöffnung mindestens eines Verbindungskanals (234, 237) in dem rotierenden Teil (232) mit den einander zugewandten Öffnungen mindestens eines Einlass- (233, 236) und Auslasskanals (235, 238) in dem feststehenden Teil (230) in mindestens einer Drehposition ausgerichtet ist und wobei in mindestens einer anderen Drehposition die Einlass- und Auslassöffnung des Verbindungskanals (234, 237) in dem rotierenden Teil (232) nicht mit den gleichen gegenüberliegenden Öffnungen des Einlasskanals (233, 236) und des Auslasskanals (235, 238) im feststehenden Teil (230) ausgerichtet ist, wobei die Einlassöffnung mindestens eines Verbindungskanals (234, 237) im rotierenden Teil (232) mit der gegenüberliegenden Öffnung eines Einlasskanals (233, 236) im feststehenden Teil (230) ausgerichtet ist und wobei die Auslassöffnung des Verbindungskanals (234, 237) mit der zugewandten Öffnung eines Auslasskanals (235, 238) in dem feststehenden Teil (230) in mindestens einer Drehposition ausgerichtet ist und wobei in mindestens einer anderen Drehposition die gleiche Einlassöffnung des Verbindungskanals (234, 237) in dem rotierenden Teil (232) mit einer zugewandten Öffnung eines anderen Einlasskanals (233, 236) im feststehenden Teil (230) ausgerichtet ist und mit einer zugewandten Öffnung eines anderen Auslasskanals (235, 238) im feststehenden Teil (230) ausgerichtet ist, wobei der feststehende Teil (230) eine zylindrische Form aufweist, die entlang der Drehachse (231) des rotierenden Teils (232) positioniert ist, und wobei der rotierende Teil (232) eine röhrenförmige Form aufweist, die radial außerhalb des feststehenden Teils (230) positioniert ist, und wobei der rotierende Teil (232) aus zwei oder mehr röhrenförmigen Schichten besteht, die radial relativ zueinander in Bezug auf die Drehachse (231) positioniert sind, und wobei die Verbindungskanäle (234, 237) durch Öffnungen in den röhrenförmigen Schichten gebildet sind.

3. Vorrichtung nach Anspruch 1 oder 2, wobei der feststehende Teil (220, 230) oder die feststehenden Teile (201, 205, 27, 28) mit Folgendem versehen sind: einem Einlasskanal (103) zur Aufnahme eines Speisegases und einem Auslasskanal (212a) zur Abgabe eines Speisegases, einem oder mehreren Einlasskanälen (211b, 205b, 212b, 206b) zur Aufnahme von Gas mit unterschiedlichen Druckwerten und einem oder mehreren Auslasskanälen (205a, 212a), zur Abgabe von Gas mit variierenden Druckwerten und einem Auslasskanal (105) zur Abgabe von Gas an einen Wärmetauscher (107) und einem Einlasskanal (106) zur Aufnahme von Gas von einem Wärmetauscher (107), wobei der rotierende Teil (26) mit Verbindungskanälen (29) versehen ist, um in einer Drehposition
- den Einlasskanal (103) zur Aufnahme eines Speisegases mit einem Auslasskanal (212a) im feststehenden Teil (28) zur Abgabe eines Speisegases zu verbinden,
- den einen oder die mehreren Einlasskanäle (205b, 212b, 206b) zur Aufnahme von Gas mit variierenden Druckwerten mit einem oder mehreren Auslasskanälen (211a, 205a) in dem feststehenden Teil (27, 28) zur Abgabe des Gases mit variierenden Druckwerten und mit dem Auslasskanal (105) zur Abgabe von Gas an einen Wärmetauscher (107) zu verbinden, und
- den Einlass (106) zur Aufnahme von Gas vom Wärmetauscher (107) mit einem Auslasskanal (206a) im feststehenden Teil (28) zu verbinden.

4. Vorrichtung nach Anspruch 3, wobei die Kanäle (29) im rotierenden Teil (26) derart konfiguriert sind, dass beim Starten von einer Startposition und Drehen des rotierenden Teils (26) in eine nächste Drehposition jeder Einlasskanal (211b, 205b, 212b, 206b) im feststehenden Teil (27, 28) bis zur vollen Drehung mit einem anderen Auslasskanal (211a, 205a, 212a, 206a) im feststehenden Teil (27, 28) in Fluidverbindung steht.

5. Vorrichtung nach einem der Ansprüche 3 bis 4, wobei die Vorrichtung eine oder mehrere Konfigurationen mit 2n+4 oder mehr Behältern (211, 205, 212, 206) verbindet, wobei n 2 oder mehr ist, wobei jeder Behälter (211, 205, 212, 206) einen Einlass und einen Auslass aufweist, die mit dem feststehenden Teil (27, 28) der Vorrichtung verbunden sind.

6. Vorrichtung nach Anspruch 5, wobei die Vorrichtung ferner für jede Konfiguration einen Behälter (211, 205, 212, 206) mit dem Einlass eines Wärmetauschers (107), einen Behälter mit dem Auslass des Wärmetauschers (107), einen Behälter mit dem Einlasskanal (103) zur Aufnahme eines Speisegases und einen Behälter mit einem Einlass (124) zur Zufuhr eines Spülgases und einem Auslass (109) zum Abführen des Spülgases verbindet.

7. Vorrichtung nach einem der Ansprüche 5 bis 6, wobei n zwischen 2 und 500 liegt.

8. Vorrichtung nach Anspruch 7, wobei n mindestens 4 ist.

9. Verfahren zum Erzielen eines kontinuierlichen Stromes von komprimiertem Gas, ausgehend von einem Speisegas (13) mit einem geringeren Druck, durch Ausführen der folgenden Schritte:
(i) Erhöhen des Drucks und der Temperatur eines Gases (14) mit einem Zwischendruck durch indirekten Wärmeaustausch in einem Wärmetauscher (19) gegen ein Fluid (15) mit einer höheren Temperatur, um ein Gas (16) mit hohem Druck und hoher Temperatur zu erhalten,
(ii) Erhalten eines Teils des Gases (17) mit hoher Temperatur und hohem Druck als komprimiertes Gas,
(iii) Verwenden eines anderen Teils des Gases mit hoher Temperatur und hohem Druck als Treibgas (23), um den Druck des Speisegases (13) in n-Nivellierungsstufen zu erhöhen, um das Gas (14) mit einem Zwischendruck zur Verwendung in Schritt (i) zu erhalten, und Fortsetzen der Abfolge des Hinzufügens eines Teils des verbleibenden Treibgases (22), 21) zu dem in der vorhergehenden Stufe erhaltenen Gas für die verbleibenden (n-2) Nivellierungsstufen und Hinzufügen des dann verbleibenden Treibgases (20) zu dem Speisegas (13) in der ersten Nivellierungsstufe, wobei das Verfahren in einer Konfiguration von 2n+4 oder mehr miteinander verbundenen Behältern (1-12) jeweils in einem unterschiedlichen Zustand durchgeführt wird, wobei die unterschiedlichen Zustände Zustand 1 bis Zustand 2n+4 gemäß dem Folgenden sind:
Zustand 1 ist ein Füllzustand, Zustand 2 bis Zustand (n+1) ist ein Zustand, in dem der Inhalt des Behälters durch Nivellierung im Druck zunimmt, Zustand (n+2) ist ein Zustand, in dem der Inhalt des Behälters einem Wärmetauscher (19) zugeführt wird, um Schritt (i) durchzuführen, Zustand (n+3) ist ein Produktgasabgabezustand, wobei ein Teil des Behälterinhalts oder des im Wärmetauscher (19) erzeugten Inhalts gemäß Schritt (ii) abgegeben wird und wobei ein Teil des im Wärmetauscher (19) erzeugten Gasinhalts im Behälter verbleibt, Zustand (n+4) bis Zustand (2n+3) sind Zustände, in denen ein Teil des Inhalts des Behälters im Zustand (n+4) bis Zustand (2n+3) verwendet wird, um sich mit den Behältern im Zustand 2 bis Zustand (n+1) wie in Schritt (iii) des erfindungsgemäßen Verfahrens zu nivellieren, und Zustand (2n+4), in dem das verbleibende Treibgas (18) aus dem Behälter abgeführt wird, und wobei eine Fluidverteilungsvorrichtung nach einem der Ansprüche 1 bis 8 verwendet wird, um den Zustand jedes Behälters (1-12) kontinuierlich in einen nächsten Zustand zu ändern und den erforderlichen Gastransport zwischen den Behältern (1-12) bereitzustellen, um das Speisegas (13) zu empfangen und um Gas zu und von dem Wärmetauscher (19) abzugeben und zu empfangen, so dass die Schritte (i)-(iii) kontinuierlich wiederholt werden und ein kontinuierlicher Strom von komprimiertem Gas (17) erhalten wird.

10. Verfahren nach Anspruch 9, wobei ein Zyklus der Schritte (i)-(iii) zwischen 1 und 2000 Mal pro Minute durchgeführt wird.

11. Verfahren nach einem der Ansprüche 9 bis 10, wobei in Schritt (i) das Fluid mit einer höheren Temperatur ein Gas mit einer Temperatur zwischen 100 und 1000 ºC ist.

12. Verfahren nach einem der Ansprüche 9 bis 11, wobei das komprimierte Gas ein Sauerstoff enthaltendes Gas zur Verwendung als Speisegaskomponente einer Brennkammer als Teil einer Gasturbine ist.

13. Verfahren zum Erzeugen von elektrischer Energie mittels einer Gasturbine, wobei die Gasturbine einen Brennstoff (113) und komprimiertes, Sauerstoff enthaltendes Gas (111) als Speisegas verwendet und wobei die folgenden Schritte durchgeführt werden: (a) Komprimieren eines Sauerstoff enthaltenden Gases (101) mittels eines Kompressors, (b) weiteres Komprimieren des Sauerstoff enthaltenden Gases (103) mittels eines Verfahrens nach einem der Ansprüche 9 bis 12, (c) Verbrennen des Brennstoffs (113) mit dem in Schritt (b) erhaltenen komprimierten, Sauerstoff enthaltenden Gas (108), um ein unter Druck stehendes Verbrennungsgas (114) zu erhalten, und (d) Expandieren des Verbrennungsgases (114) in einem Expander (115) einer Gasturbine, die elektrische Energie erzeugt.

14. Verfahren nach Anspruch 13, wobei in Schritt (d) ein Strom eines expandierten Rauchgases (117) erhalten wird und wobei dieses Rauchgas (117) verwendet wird, um die Temperatur des komprimierten Sauerstoffgases (108) mittels indirektem Wärmeaustausch vor der Durchführung von Schritt (c) zu erhöhen.

15. Verfahren nach Anspruch 14, wobei Schritt (b) durch Komprimieren des sauerstoffhaltigen Gases (103) mittels eines Verfahrens nach einem der Ansprüche 10 bis 12 durchgeführt wird, und wobei das restliche Treibgas (109) mit dem Rauchgas (118) kombiniert wird, nachdem seine Temperatur mittels des Wärmeaustauschs gesenkt wurde, und wobei der resultierende kombinierte Gasstrom (121) als das Fluid mit einer höheren Temperatur in Schritt (i) verwendet wird.

16. Verfahren nach Anspruch 15, wobei der kombinierte Gasstrom im Heizwert erhöht wird, bevor er als das Fluid (121) mit einer höheren Temperatur in Schritt (i) verwendet wird, indem der kombinierte Gasstrom mit einem Abgas (119) eines anderen Verfahrens gemischt oder ein zusätzlicher Brennstoff verbrannt wird.

## Revendications

1. Appareil de distribution de fluide comprenant une partie fixe (201, 205, 220) et une partie rotative (202, 221), dans lequel la partie fixe (201, 205, 220) est pourvue d'au moins deux canaux d'entrée (204, 209, 222, 225) et d'au moins deux canaux de sortie (210, 207, 226, 223) et dans lequel chaque canal d'entrée (204, 209, 222, 225) et de sortie (210, 207, 226, 223) présente une ouverture faisant face à la partie rotative (202, 221), dans lequel la partie rotative (202, 221) est positionnée de manière rotative par rapport à la partie fixe (201, 205, 220) de telle sorte que la partie rotative (202, 221) puisse avoir plusieurs positions de rotation par rapport à la partie fixe (201, 205, 220), dans lequel la partie rotative (202, 221) est pourvue d'au moins deux canaux de raccordement (213, 214, 215, 216, 224, 227, 228), dans lequel chaque canal de raccordement présente une ouverture d'entrée et de sortie de la partie rotative (202, 221), dans lequel l'ouverture d'entrée et de sortie d'au moins un canal de raccordement (213, 214, 215, 216, 224, 227, 228) de la partie rotative (202, 221) s'aligne avec les ouvertures en regard d'au moins un canal d'entrée (204, 209, 222, 225) et de sortie (210, 207, 226, 223) de la partie fixe (201, 205, 220) dans au moins une position de rotation et dans lequel, dans au moins une autre position de rotation, l'ouverture d'entrée et de sortie du canal de raccordement (213, 214, 215, 216, 224, 227, 228) de la partie rotative (202, 221) n'est pas alignée avec les mêmes ouvertures en regard du canal d'entrée (204, 209, 222, 225) et de sortie (210, 207, 226, 223) de la partie fixe (201, 205, 220), dans lequel l'ouverture d'entrée d'au moins un canal de raccordement (213, 214, 215, 216, 224, 227, 228) de la partie rotative (202, 221) s'aligne avec l'ouverture en regard d'un canal d'entrée (204, 209, 222, 225) de la partie fixe (201, 205, 220) et dans lequel l'ouverture de sortie du le canal de raccordement (213, 214, 215, 216, 224, 227, 228) s'aligne avec l'ouverture en regard d'un canal de sortie de la partie fixe (201, 205, 220) dans au moins une position de rotation et dans lequel, dans au moins une autre position de rotation, la même ouverture d'entrée du canal de raccordement de la partie rotative (202, 221) est alignée avec une ouverture en regard d'un canal d'entrée différent de la partie fixe (201, 205, 220) et alignée avec une ouverture en regard d'un canal de sortie différent de la partie fixe (201, 205, 220), dans laquelle la partie rotative (202, 221) a une forme cylindrique et dans lequell la partie fixe (220) ou les parties fixes (201, 205) sont positionnées axialement par rapport à la partie rotative (202, 221) d'un côté ou des deux côtés et dans lequel la partie rotative (202, 221) est constituée de deux couches cylindriques ou plus (202a, 202b, 202c) empilées le long de l'axe de rotation (206) et dans lequel les canaux de connexion sont formés par des ouvertures dans les couches cylindriques (202a, 202b, 202c).

2. Appareil de distribution de fluide comprenant une partie fixe (230) et une partie rotative (232), dans lequel la partie fixe (230) est pourvue d'au moins deux canaux d'entrée (233, 236) et d'au moins deux canaux de sortie (235, 238) et dans lequel chaque canal d'entrée (233, 236) et de sortie (235, 238) a une ouverture faisant face à la partie rotative (232), dans lequel la partie rotative (232) est positionnée avec liberté de rotation par rapport à la partie fixe (230) de telle sorte que la partie rotative (232) puisse prendre de multiples positions de rotation par rapport à la partie fixe (230), dans lequel la partie rotative (232) est pourvue d'au moins deux canaux de raccordement (234, 237), chaque canal de raccordement (234, 237) ayant une ouverture d'entrée et de sortie de la partie rotative (232), dans lequel l'ouverture d'entrée et de sortie d'au moins un canal de raccordement (234, 237) de la partie rotative (232) s'aligne avec les ouvertures en regard d'au moins un canal d'entrée (233, 236) et de sortie (235, 238) de la partie fixe (230) dans au moins une position de rotation et dans au moins une autre position de rotation, dans lequel l'ouverture d'entrée et de sortie du canal de raccordement (234, 237) de la partie rotative (232) n'est pas alignée avec les mêmes ouvertures en regard du canal d'entrée (233, 236) et de sortie (235, 238) de la partie fixe (230), dans lequel l'ouverture d'entrée d'au moins un canal de raccordement (234, 237) de la partie rotative (232) s'aligne avec l'ouverture en regard d'un canal d'entrée (233, 236) de la partie fixe (230) et dans lequel l'ouverture de sortie du canal de raccordement (234, 237) s'aligne avec l'ouverture en regard d'un canal de sortie (235, 238) de la partie fixe (230) dans au moins une position de rotation et dans lequel dans au moins une autre position de rotation, la même ouverture d'entrée du canal de raccordement (234, 237) de la partie rotative (232) est alignée avec une ouverture en regard d'un canal d'entrée différent (233, 236) de la partie fixe (230) et alignée avec une ouverture en regard d'un canal de sortie différent (235, 238) de la partie fixe (230), dans lequel la partie fixe (230) a une forme cylindrique positionnée le long de l'axe de rotation (231) de la partie rotative (232) et dans lequel la partie rotative (232) a une forme tubulaire positionnée radialement vers l'extérieur à partir de la partie fixe (230) et dans lequel la partie rotative (232) est constituée de deux couches tubulaires ou plus, positionnées radialement l'une par rapport à l'autre par rapport à l'axe de rotation (231) et dans lequel les canaux de raccordement (234, 237) sont formés par des ouvertures des couches tubulaires.

3. Appareil selon la revendication 1 ou 2, dans lequel la partie fixe (220, 230) ou les parties fixes (201, 205, 27, 28) sont pourvues d'un canal d'entrée (103), permettant de recevoir un gaz d'alimentation, et d'un canal de sortie (212a), permettant d'évacuer un gaz d'alimentation, d'un ou de plusieurs canaux d'entrée (211 b, 205b, 212b, 206b), permettant de recevoir un gaz présentant des pressions variables, et d'un ou de plusieurs
canaux de sortie (205a, 212a, 206a), permettant d'évacuer un gaz présentant des pressions variables, et d'un canal de sortie (105), permettant d'évacuer du gaz vers un échangeur de chaleur (107), et d'un canal d'entrée (106), permettant de recevoir du gaz d'un échangeur de chaleur (107), la partie rotative (26) étant pourvue de canaux de raccordement (29) permettant, à une position de rotation, de raccorder
- le canal d'entrée (103) pour recevoir un gaz d'alimentation destiné à un canal de sortie (212a) dans la partie fixe (28), pour évacuer un gaz d'alimentation,
- le ou les canaux d'entrée (205b, 212b, 206b) pour recevoir du gaz présentant des pressions variables destiné à un ou à plusieurs canaux de sortie (211a, 205a) de la partie fixe (27, 28) pour évacuer le gaz présentant des pressions variables et destiné au canal de sortie (105), pour évacuer le gaz vers un échangeur de chaleur (107), et
- l'entrée (106) pour recevoir le gaz de l'échangeur de chaleur (107) destiné à un canal de sortie (206a) de la partie fixe (28).

4. Appareil selon la revendication 3, dans lequel les canaux (29) de la partie rotative (26) sont conçus de sorte que lors du démarrage à partir d'une position de départ et lors de la rotation de la partie rotative (26) vers une position de rotation suivante, chaque canal d'entrée (211b, 205b, 212b, 206b) de la partie fixe (27, 28) est raccordé de manière fluidique à un canal de sortie différent (211a, 205a, 212a, 206a) de la partie fixe (27, 28), vers le haut et jusqu'à rotation complète.

5. Appareil selon l'une quelconque des revendications 3 à 4, dans lequel l'appareil raccorde une ou plusieurs configurations comprenant 2n+4 récipients ou plus (211, 205, 212, 206), dans lequel n vaut 2 ou plus, une entrée et une sortie de chaque récipient (211, 205, 212, 206) étant raccordées à la partie fixe (27, 28) de l'appareil.

6. Appareil selon la revendication 5, dans lequel l'appareil raccorde en outre, pour chaque configuration, un récipient (211, 205, 212, 206) avec l'entrée d'un échangeur de chaleur (107), un récipient avec la sortie de l'échangeur de chaleur (107), un récipient avec le canal d'entrée (103), pour recevoir un gaz d'alimentation, et un récipient avec une entrée (124), pour alimenter un gaz de purge, et avec une sortie (109), pour évacuer le gaz de purge.

7. Appareil selon l'une quelconque des revendications 5 à 6, dans lequel n est compris entre 2 et 500.

8. Appareil selon la revendication 7, dans lequel n vaut au moins 4.

9. Processus d'obtention d'un flux continu de gaz comprimé à partir d'un gaz d'alimentation (13) présentant une pression inférieure par les étapes suivantes :
(i) augmentation de la pression et de la température d'un gaz (14) présentant une pression intermédiaire au moyen d'un échange thermique indirect dans un échangeur de chaleur (19) contre un fluide (15) présentant une température plus élevée, pour obtenir un gaz (16) à pression et à température élevées,
(ii) obtention d'une partie du gaz (17) à température et à pression élevées comme gaz comprimé,
(iii) utilisation d'une autre partie du gaz à température et pression élevées comme gaz d'entraînement (23) pour augmenter la pression du gaz d'alimentation (13) en n étages de mise à niveau pour obtenir le gaz (14) présentant une pression intermédiaire destiné à être utilisé dans l'étape (i) et poursuite de ladite séquence d'ajout d'une partie du gaz d'entraînement restant (22, 21) au gaz obtenu à l'étage précédent pour les (n-2) étages de mise à niveau restants et ajout du gaz d'entraînement restant (20) au gaz d'alimentation (13) dans le premier étage de mise à niveau, le processus ayant lieu dans une configuration d'au moins 2n+4 récipients raccordés entre eux (1 à 12), dont chacun est dans un état différent, les différents états étant l'état 1 à l'état (2n+4) selon :
l'état 1 est un état de remplissage, l'état 2 à l'état (n+1) est un état dans lequel le contenu du récipient augmente en pression par mise à niveau, l'état (n+2) est un état dans lequel le contenu du récipient est fourni à un échangeur de chaleur (19) pour effectuer l'étape (i), l'état (n+3) est un état d'évacuation du gaz produit dans lequel une partie du contenu du récipient ou le contenu généré dans l'échangeur de chaleur (19) est évacué selon l'étape (ii) et dans lequel une partie du contenu en gaz généré dans l'échangeur de chaleur (19) reste dans le récipient, l'état (n+4) à l'état (2n+3) sont des états dans lequel une partie du contenu du récipient de l'état (n+4) à l'état (2n+3) est utilisé pour niveler les récipients de l'état 2 à l'état (n+1) comme à l'étape (iii) du processus selon l'invention et à l'état (2n+4) dans lequel le gaz d'entraînement restant (18) est évacué du récipient et dans lequel un appareil distributeur de fluide selon l'une quelconque des revendications 1 à 8 est utilisé pour faire passer en continu l'état de chaque récipient (1 à 12) à un état suivant et pour fournir le transport de gaz requis entre
les récipients (1 à 12), pour recevoir le gaz d'alimentation (13) et pour évacuer du gaz vers l'échangeur de chaleur (19) et pour en recevoir de ce dernier de sorte que les étapes (i) à (iii) soient répétées en continu et qu'un flux continu de gaz comprimé (17) soit obtenu.

10. Processus selon la revendication 9, dans lequel un cycle des étapes (i) à (iii) a lieu entre 1 et 2 000 fois par minute.

11. Processus selon l'une quelconque des revendications 9 à 10, dans lequel à l'étape (i), le fluide présentant une température plus élevée est un gaz présentant une température comprise entre 100 et 1 000 °C.

12. Processus selon l'une quelconque des revendications 9 à 11, dans lequel le gaz comprimé est un gaz contenant de l'oxygène destiné à être utilisé comme élément d'alimentation d'une chambre de combustion en tant que partie d'une turbine à gaz.

13. Processus de production d'énergie électrique au moyen d'une turbine à gaz, dans lequel ladite turbine à gaz utilise un combustible (113) et de l'oxygène comprimé comprenant du gaz (111) comme alimentation et dans lequel les étapes suivantes sont effectuées, (a) compression d'un gaz contenant de l'oxygène (101) au moyen d'un compresseur, (b) compression supplémentaire dudit gaz contenant de l'oxygène (103) au moyen d'un processus selon l'une quelconque des revendications 9 à 12, (c) combustion du combustible (113) avec le gaz contenant de l'oxygène comprimé (108) obtenu à l'étape (b) pour obtenir un gaz de combustion sous pression (114) et (d) détente dudit gaz de combustion (114) dans un détendeur (115) d'une turbine à gaz générant de l'énergie électrique.

14. Processus selon la revendication 13, dans lequel un courant de gaz de combustion détendu (117) est obtenu à l'étape (d) et dans lequel ce gaz de combustion (117) sert à augmenter la température de l'oxygène gazeux comprimé (108) au moyen d'un échange thermique indirect avant d'effectuer l'étape (c).

15. Processus selon la revendication 14, dans lequel l'étape (b) est réalisée par compression dudit gaz contenant de l'oxygène (103) au moyen d'un processus selon l'une quelconque des revendications 10 à 12 et dans lequel le gaz d'entraînement restant (109) est combiné avec le gaz de combustion (118) après avoir été réduits en température au
moyen de l'échange thermique et dans lequel le flux de gaz combiné (121) résultant est utilisé comme fluide présentant une température plus élevée dans l'étape (i).

16. Processus selon la revendication 15, dans lequel le flux de gaz combiné est augmenté en valeur calorique avant d'être utilisé comme fluide (121) présentant une température plus
élevée dans l'étape (i), par mélange dudit flux de gaz combiné avec un gaz d'échappement (119) d'un autre processus ou par combustion d'un combustible supplémentaire.
